# DEMANDE DE BREVET EUROPEEN

(11) **EP 3 679 799 A1**
(43) Date de publication de la demande: **15.07.2020**
(21) Numéro de dépôt: 20150957.7
(22) Date de dépôt: 09.01.2020
(51) Int. Cl.: A21C 5/00

(54) **DISPOSITIF DE DIVISION DE PÂTE ET PROCÉDÉS CORRESPONDANTS**

(30) Priorité: 09.01.2019 FR 1900199
(71) Demandeur: Societe d'Equipements de Boulangerie Patisserie, 26800 Portes-les-Valence (FR)
(72) Inventeur: FABRE, Jean, 58000 NEVERS (FR); MARQUES DUARTE, Ruben, 58640 VARENNES VAUZELLES (FR); TELLE, Fabien, 58000 SAINT ELOI (FR)
(74) Mandataire: Lavoix

(57) **Abrégé**

Ce dispositif de division de pâte (1) comprend :
- une cuve (60) comportant au moins une cloison (65) ;
- un plancher de cuve comprenant des rainures ;
- des lames placées dans les rainures.

Les lames et le plancher de cuve sont mobiles l'un par rapport à l'autre entre une position active dans laquelle les lames font saillie du plancher de cuve et une position inactive. Un ensemble de lames comporte les lames définissant au moins un compartiment de découpe de forme allongée de la cuve (60), chaque forme allongée de chaque compartiment de découpe définissant une longueur et une largeur du compartiment de découpe. Le rapport de la longueur sur la largeur de chaque compartiment de découpe est supérieur ou égal à 3.

## Description

La présente invention concerne un dispositif de division de pâte, comprenant :
- une cuve comportant au moins une cloison ;
- un plancher de cuve comprenant des rainures ;
- des lames placées dans les rainures ;
les lames et le plancher de cuve étant mobiles l'un par rapport à l'autre entre une position active dans laquelle les lames font saillie du plancher de cuve et une position inactive ;
un ensemble de lames comportant les lames définissant au moins un compartiment de découpe de forme allongée de la cuve, chaque forme allongée de chaque compartiment de découpe définissant une longueur et une largeur du compartiment de découpe.

L'invention s'applique particulièrement aux dispositifs de division de pâtes et notamment les diviseuses hydrauliques dans le milieu de la boulangerie.

Les diviseuses hydrauliques sont des outils utilisés notamment dans le milieu de la boulangerie pour diviser un morceau de pâte en pâtons de taille égale. De tels dispositifs comportent une cuve de réception de la pâte, délimitée par quatre cloisons latérales au fond de laquelle est disposé un plancher mobile. Des lames sont mobiles au travers de rainures du plancher mobile, entre une position où elles dépassent du plancher et une position où elles ne dépassent pas du plancher. Les lames dépassant du plancher définissent des zones de découpe de la cuve, ces zones de découpe étant de forme rectangulaires, proches de la forme d'un carré. Un couvercle permet de fermer la partie supérieure de la cuve. La translation du plancher mobile respectivement des lames vers le couvercle, lorsque celui-ci est dans sa position fermée, conduit à l'égalisation respectivement à la découpe de la pâte dans la cuve en pâtons. Bien qu'un tel dispositif de division de pâte résulte en une précision accrue de la découpe et un gain de temps en comparaison à une découpe manuelle, de tels dispositifs nécessitent d'être encore améliorés. La forme des pâtons étant proche du carré, elle nécessite un travail de mise en forme important pour la fabrication de pain en forme de baguette. Le développement des processus de pousse lente et de cuisson directe de baguettes incite à la formation directe de pâtons allongés, dès la phase de découpe. De tels pâtons peuvent être cuits directement après leur découpe.

A cet effet, il est connu d'ajouter sur les dispositifs de division de pâte une grille de division, les zones de division de cette grille étant rectangulaires de forme allongées. Un dispositif de division de pâte équipé d'une telle grille de division permet donc de former des pâtons directement en forme de baguette.

Cependant, la découpe de pâtons de forme allongée à l'aide d'un tel dispositif nécessite d'une part d'égaliser la pâte entre une plaque placée au fond de la cuve et le couvercle et d'autre part de diviser cette pâte égalisée avec la mise en position de division d'une grille, après ouverture du couvercle.

Le problème lié à une telle découpe de pâtons en forme allongée est donc une manutention difficile et un temps de découpe élevé.

Le but de la présente invention est de proposer un dispositif de division de pâte qui rende l'utilisation plus économique. En particulier, le dispositif de division de pâte devrait permette la réduction du temps de fabrication de baguette et faciliter la manutention associée à la découpe de pâtons en forme allongée.

A cet effet, l'invention a pour objet un dispositif de division de pâte, caractérisé en ce que le rapport de la longueur sur la largeur de chaque compartiment de découpe est supérieur ou égal à 3.

Le dispositif de division de pâte selon l'invention permet ainsi la découpe de pâtons allongés directement avec les lames, réduisant le temps et le nombre d'opérations nécessaires pour obtenir de tels pâtons.

Suivant d'autres aspects avantageux de l'invention, le dispositif de division de pâte comporte l'une ou plusieurs des caractéristiques suivantes, prises isolément ou suivant toutes les combinaisons techniquement possibles :
- la cuve comporte quatre cloisons qui forment en vue de plan un quadrilatère ou un rectangle ;
- le rapport de la longueur sur la largeur de chaque compartiment de découpe est supérieur ou égal à 3,5 ;
- le rapport de la longueur sur la largeur de chaque compartiment de découpe est supérieur ou égal à 4 ;
- l'ensemble de lames comprend un premier jeu de lames parallèles, ce premier jeu comprenant :
   - un premier sous-jeu de lames ;
   - un second sous-jeu de lames ;
   les lames du premier et du deuxième sous-jeu étant disposées en alternance, le dispositif ayant une configuration dense dans laquelle les lames du premier et du deuxième sous-jeu sont en position active et une configuration alternée dans laquelle les lames du premier sous-jeu sont en position active tandis que les lames du deuxième sous-jeu sont en position inactive, un premier moyen de transition étant adapté pour amener le dispositif de la configuration dense vers la configuration alternée ;
- l'ensemble de lames comprend un second jeu de lames, comprenant au moins une lame disposée perpendiculairement aux lames du premier jeu, le dispositif ayant une configuration segmentée dans laquelle les lames du second jeu sont dans une position active et une configuration continue dans laquelle les lames du second jeu sont dans une position inactive, un second moyen de transition étant adapté pour amener le dispositif de la configuration segmentée vers la configuration continue ;
- le dispositif comprend une grille de division, qui est montée mobile par rapport à la cuve entre une position de division, dans laquelle la grille ferme la cuve du côté opposé au plancher de cuve, et une position de repos, la grille de division définissant au moins un compartiment de division de forme non allongée, chaque forme non allongée de chaque compartiment de division définissant une longueur et une largeur du compartiment de division, le rapport de la longueur sur la largeur de chaque compartiment de division étant inférieur à 3, notamment inférieur ou égal à 2 ; et
- le dispositif comprend par ailleurs une plaque de division adaptée aux dimensions du fond de cuve et adaptée à être en appui sur les lames de découpe.

Selon un autre aspect, l'invention concerne également un procédé de découpe de pâtons dans un dispositif de division de pâte comme défini ci-dessus, le dispositif comprenant par ailleurs un couvercle fermant la cuve du côté opposé au plancher de cuve, comprenant les étapes suivantes :
- l'égalisation d'une pâte dans la cuve, le plancher de cuve montant vers le couvercle et la pâte étant aplatie entre le plancher de cuve et le couvercle, l'ensemble des lames étant dans leur position inactives ;
- la découpe de la pâte en pâtons par l'activation d'au moins une lame, en mettant lesdites lames dans une position active ;
- l'ouverture du couvercle; et
- le déplacement du plancher de la cuve par rapport aux lames afin d'amener chaque lame dans sa position inactive.

L'invention concerne par ailleurs un procédé de découpe de pâtons dans un dispositif de division de pâte comme défini ci-dessus, le dispositif comprenant par ailleurs un couvercle fermant la cuve du côté opposé au plancher de cuve, comprenant les étapes suivantes :
- l'égalisation de la pâte dans la cuve, la plaque de division étant posée sur les lames montant vers le couvercle fermant la cuve du côté opposé au plancher de cuve et la pâte étant aplatie entre la plaque de division et le couvercle ;
- l'ouverture du couvercle ;
- la mise en place de la grille de division dans la position de division ;
- la division de la pâte en pâtons par la montée de la plaque de division vers la grille de division ; et
- la mise en place de la grille de division dans la position de repos.

L'invention se rapporte en outre à un procédé de préparation de pain, comprenant:
- la pétrification d'une pâte en obtenant une pâte pétrie ;
- la mise au repos de la pâte pétrie en obtenant une pâte reposée ;
- l'insertion d'un morceau de la pâte reposée dans la cuve d'un dispositif de division de pâte comme défini ci-dessus ;
- la découpe selon un procédé tel que défini ci-dessus de la pâte reposée insérée dans la cuve en obtenant des pâtons découpés ; et
- la cuisson des pâtons découpés, soit directement, tels que coupés selon l'étape de découpe des pâtons, soit après une étape de fermentation des pâtons.

L'invention sera mieux comprise à la lecture de la description qui va suivre, donnée uniquement à titre d'exemple non limitatif et faite en se référant aux dessins sur lesquels :
[Fig 1] La figure 1 est une représentation schématique en perspective d'un dispositif de division de pâte selon un premier mode de réalisation de l'invention ;
[Fig 2] La figure 2 est une représentation schématique en perspective d'un dispositif de division de pâte selon un second mode de réalisation de l'invention ;
[Fig 3] La figure 3 est une représentation schématique d'une partie d'un dispositif de division de pâte ayant un premier agencement de lames ;
[Fig 4] La figure 4 est une représentation schématique d'une partie d'un dispositif de division de pâte ayant un deuxième agencement de lames ;
[Fig 5] La figure 5 est une représentation schématique d'une partie d'un dispositif de division de pâte ayant un troisième agencement de lames ;
[Fig 6] La figure 6 est une représentation schématique d'une partie d'un dispositif de division de pâte ayant un quatrième agencement de lames ;

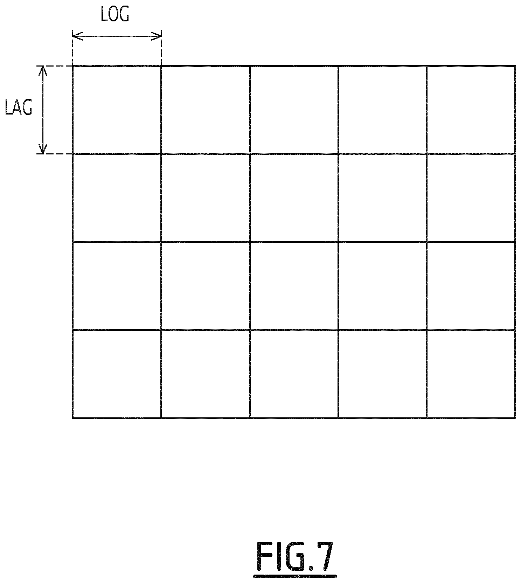

[Fig 7] La figure 7 est une représentation schématique d'un agencement de grille de division d'une partie d'un dispositif de division de pâte selon l'invention ;
[Fig 8] La figure 8 est une représentation schématique en perspective du système de commande d'un dispositif de division de pâte selon l'invention ;
[Fig 9] La figure 9 est une représentation schématique d'une cuve et d'un agencement de lames selon une variante d'un dispositif de division de pâte selon l'invention ;
[Fig 10] La figure 10 est une représentation schématique d'une cuve et d'un agencement de lames selon une autre variante d'un dispositif de division de pâte selon l'invention ; et
[Fig 11] [Fig 12] Les figures 11 et 12 sont des représentations schématiques de la cuve du dispositif de division de pâte selon l'invention comportant des variantes de disposition de lames.

Dans la description qui suit, on considère une base orthonormée directe (X, Y, Z), la direction Z correspondant à la verticale. Les termes « supérieur » et « haut » ainsi que « inférieur » et « bas » sont définis par rapport à la direction d'élévation Z. Les termes « gauche » et « droite » sont définis par rapport à la direction de largeur Y. Les termes « avant » et « arrière » sont définis par rapport à la direction de profondeur X.

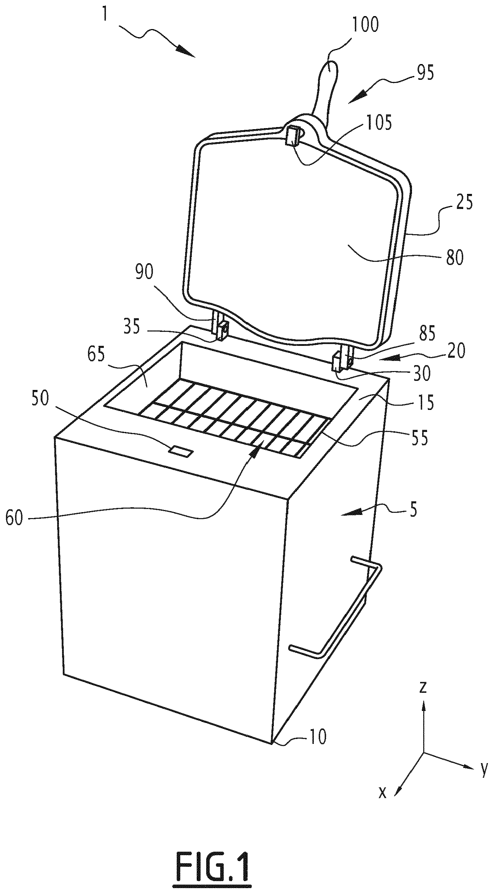

Sur la figure 1 est représenté un dispositif de division de pâte 1 qui comprend un bâti 5. Le bâti 5 comporte une région de contact avec un sol 10 d'un bâtiment. Le bâti 5 comprend une face supérieure 15 muni d'un organe d'attache 20.

Le dispositif de division de pâte 1 comporte un couvercle 25 relié par l'organe d'attache 20 au bâti 5. Cet organe d'attache 20 du couvercle 25 comporte deux protubérances 30, 35 situées en région de l'une des arêtes de la face supérieure 15. Chacune de ces protubérances comporte un orifice accueillant un axe 40, 45. Les protubérances et les axes forment une charnière 46 reliant le couvercle au bâti 5. En variante, la charnière 46 peut comprendre d'autres éléments que les protubérances et/ou les axes. D'une manière générale, le couvercle 25 est relié par une ou plusieurs charnières 46 au bâti 5.

La face supérieure 15 du bâti 5 comporte un orifice de verrouillage 50 du couvercle 25. L'orifice de verrouillage 50 est placé plus proche d'une arête de la face supérieure que des autres arêtes de la face supérieure, ladite arête étant la plus éloignée des protubérances 30, 35.

La face supérieure 15 comprend une ouverture 55 de réception de pâte. L'ouverture 55 de réception de la pâte est en l'occurrence de forme rectangulaire. La face supérieure 15 forme un cadre autour de l'ouverture 55.

Une cuve 60 est disposée dans l'ouverture 55. La cuve 60 comporte des cloisons 65 en l'occurrence perpendiculaires à la face supérieure 15. Les cloisons 65 sont à fleur de la face supérieure 15 et s'étendent vers le bas du bâti 5. Les cloisons 65 sont liées aux arêtes de la face supérieure 15 définissant l'ouverture 55. La cuve 60 comporte par exemple quatre cloisons 65, qui forment en vue de plan un quadrilatère, et en particulier un rectangle.

Le rectangle formé par les cloisons 65 de la cuve 60 comporte deux côtés longs et deux côtés courts. En l'occurrence, un côté long de ce rectangle est disposé plus proche des charnières 46 que les autres côtés. Un côté long du rectangle formé par les cloisons 65 de la cuve 60 est en l'occurrence parallèle à l'arête de la face supérieure la plus proche des protubérances 30, 35.

Le couvercle 25 comporte une face intérieure 80, qui est apte à recouvrir complètement l'ouverture 55. La face intérieure 80 du couvercle est plane. Une face du couvercle 25 perpendiculaire à la face intérieure comporte deux protubérances 85, 90, comprenant des orifices, accueillant les axes 40, 45.

Le couvercle 25 comprend par ailleurs un organe de verrouillage 95. L'organe de verrouillage comprend une poignée 100 liée à un verrou 105 placé sur la face inférieure du couvercle, le verrou 105 étant apte à être inséré dans l'orifice de verrouillage 50. L'orifice de verrouillage 50 et l'organe de verrouillage 95 forment des moyens de verrouillage du couvercle 25 dans sa position fermée. Les moyens de verrouillage peuvent être formés par d'autres éléments qu'un orifice de verrouillage 50 et un organe de verrouillage 95.

Le dispositif de division de pâte 1 comprend un ensemble mobile de découpe 110 muni d'un plancher de cuve 115, d'un ensemble de lames 120 ainsi que d'un ensemble de moyen de transition 121. L'ensemble de moyens de transition 121 comprend un ensemble de moyens de déplacement 122.

Le plancher de cuve 115 est parallèle à la face supérieure 15 et est entouré par les cloisons 65, le contour de la surface du plancher de cuve 115 étant sensiblement identique au contour de l'ouverture 55. Le plancher de cuve 115 comporte au moins une rainure 123, et en l'occurrence plusieurs rainures. D'une manière générale, le plancher de cuve 115 comporte une rainure pour chaque lame (voir-ci-après). Chaque rainure 123 traverse le plancher de cuve de part en part selon une direction verticale.

Le plancher de cuve 115 s'étend selon un plan de plancher, qui est en l'occurrence défini par les axes X et Y.

L'ensemble de lames 120 comporte un premier jeu de lames 125 et un deuxième jeu de lames 130. Le premier jeu de lames 125 comporte un premier sous-jeu de lames 135 ainsi qu'un second sous-jeu de lames 140. Chaque jeu de lames 125, 130 comporte au moins une lame 141.

Chaque lame 141 est de forme allongée, définissant une longueur de lame LL. La longueur de lame est la plus grande étendue de la lame pris parallèlement au plan de plancher. Dans une direction perpendiculaire à la longueur de lame, et en l'occurrence perpendiculairement au plan de plancher, on définit une hauteur de lame HL, la hauteur de lame étant sensiblement inférieure à la longueur de lame. Dans une direction perpendiculaire à la longueur et à la hauteur de lame, on définit une épaisseur de lame EL, sensiblement inférieure à la hauteur de lame. La hauteur de chaque lame 141 est orientée verticalement. Une zone supérieure de chaque lame 141 est de préférence aiguisée. La face supérieure des lames 141 est ainsi assimilable à une arête. Toutes les lames 141 sont avantageusement de même hauteur et de même épaisseur.

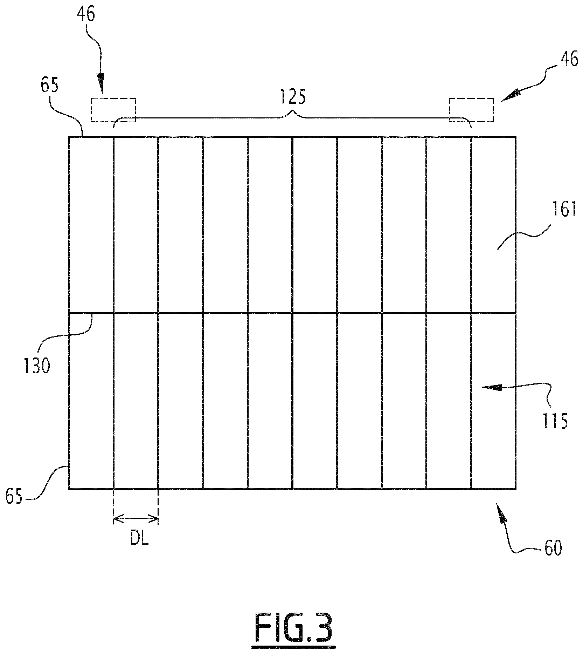

Le premier jeu 125 de lames comporte un groupe de lames 141 parallèles les unes aux autres. Selon un mode de réalisation particulier, ces lames 141 du premier jeu de lames 125 sont de même longueur. La longueur LL des lames 141 du premier jeu de lames 125 est orientée selon la direction X de profondeur. Les lames 141 du premier jeu 125 de lames sont orientées dans le cas présent parallèlement aux côtés courts du rectangle formé par les cloisons 65 de la cuve 60, et perpendiculairement aux côtés longs de ce rectangle (voir Figure 3).

Le premier jeu 125 de lames contient au moins trois lames 141. Le premier jeu 125 de lames comprend avantageusement sept ou neuf lames. A chaque fois deux lames 141 adjacentes du premier jeu 125 de lames sont disposées avantageusement à des distances DL identiques les unes des autres.

Les lames du premier 135 et du second 140 sous-jeu de lames sont disposées en alternance selon la direction perpendiculaire à la direction de la longueur des lames. Le second sous-jeu de lames 140 comprend les deux lames 141 placées aux extrémités du premier jeu de lames 125, les lames 141 du premier jeu de lames 125 placées entre ces deux lames d'extrémité appartenant successivement au premier 135 et aux second 140 sous-jeux de lames. Le nombre de lames du second sous-jeu de lames 140 est donc égal au nombre de lames du premier sous-jeu 135, augmenté de un.

Selon le mode de réalisation représenté sur la Figure 3, le deuxième jeu de lames 130 est constitué par une unique lame 141. Les lames 141 du deuxième jeu 130 de lames sont reparties régulièrement dans la cuve. Dans le cas présent, l'unique lame est donc disposée à mi-distance entre les cloisons 65 et est orientée selon la direction Y. La longueur des lames 141 du deuxième jeu de lames 130 est orientée selon la direction Y de largeur.

Le deuxième jeu 130 de lames comprend par exemple au moins deux lames 141 parallèles (non-représenté). Selon un mode de réalisation particulier, ces lames 141 du deuxième jeu de lames 130 sont de même longueur.

Les lames 141 du premier 125 et du deuxième 130 jeu de lames sont perpendiculaires entre elles.

Les lames du premier jeu 125 de lames sont par exemple orientées selon la direction de la largeur du rectangle formé en vue de plan par les cloisons 65 de la cuve 60, les lames du deuxième jeu 130 de lames étant ainsi orientées selon la direction de longueur de ce rectangle. Alternativement, les lames du premier jeu 125 de lames sont orientées selon la direction de longueur du rectangle formé en vue de plan par les cloisons 65 de la cuve 60, les lames du deuxième jeu 130 de lames étant ainsi orientées selon la direction de largeur de ce rectangle.

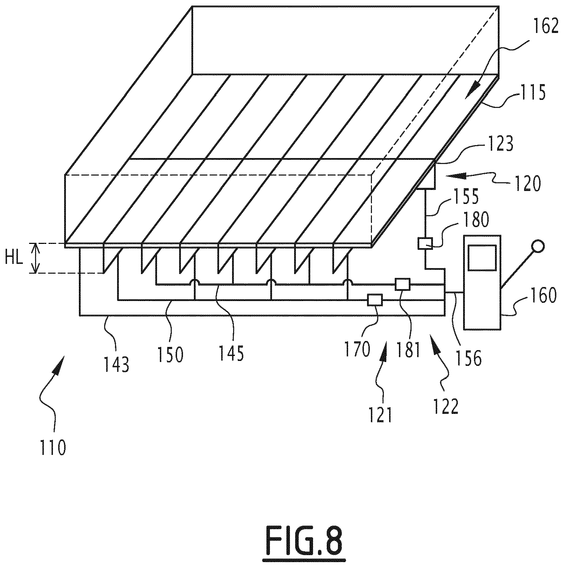

L'ensemble de lames 120 traverse le plancher de cuve 115 de part en part, au travers des rainures 123. La forme des rainures 123 sur le plancher de cuve 115 a ainsi au moins la forme de la projection des ensemble de lames 120 sur le plancher de cuve 115, au jeu de fonctionnement près. Avantageusement, la forme des rainures 123 sur le plancher de cuve 115 correspond exactement à la forme de la projection de l'ensemble de lames 120 sur le plancher 115. Ainsi, l'ensemble des rainures 123 est comblé par l'ensemble de lames 120 (voir Figure 8).

L'ensemble des moyens de déplacement 122 comporte un moyen de déplacement 143 du plancher de cuve, un moyen de déplacement 145 du premier sous-jeu de lames, un moyen de déplacement 150 du second sous-jeu de lames, un moyen de déplacement 155 du second jeu de lames ainsi qu'un moyen de déplacement principal 156.

L'ensemble des moyens de déplacement 122 comporte au moins un vérin hydraulique. Une extrémité inférieure du moyen de déplacement principal 156 est solidaire du bâti 5. L'ensemble des moyens de déplacement 122 est apte à s'allonger où se rétrécir selon une direction verticale.

Le plancher de cuve 115, ainsi que les lames 141 sont mobiles par rapport à la cuve, et en particulier par rapport aux cloisons 65, notamment selon une direction verticale. Les lames 141 et le plancher de cuve 115 sont mobiles l'un par rapport à l'autre.

L'ensemble des moyens de transition 121 comporte l'ensemble des moyens de déplacement 122, un ensemble de moyens d'embrayages 158 ainsi qu'un module d'interface utilisateur 160.

Le module d'interface utilisateur 160 est apte à recevoir des commandes d'un utilisateur. Le module d'interface d'utilisateur 160 commande l'ensemble des moyens de transition 121 en fonction des commandes de l'utilisateur.

On définit une lame 141 ou un jeu 125 ou encore un sous-jeu 135, 140 de lames en « position active » lorsque la lame 141 ou les lames du jeu 125 ou encore du sous-jeu 135, 140 de lames font saillie du plancher de cuve 115 et ceci notamment dans une position dans laquelle la face supérieure des lames 141 considérées est suffisamment proche du couvercle 25 pour couper de la pâte se trouvant dans la cuve en séparant la pâte en pâtons. L'ensemble des lames en position active, forment avec les cloisons 65 des compartiments de découpe 161 de forme allongée.

On définit une lame 141 ou un jeu 125 ou encore un sous-jeu 135, 140 de lames en « position inactive » lorsque la lame 141 ou les lames du jeu 125 ou encore le sous-jeu 135, 140 de lames ne font pas saillie du plancher de cuve 115.

Dans la position inactive, l'extrémité supérieure de chaque lame 141 est par exemple à fleur d'une surface supérieure 162 du plancher de cuve. Alternativement, les lames sont considérées en position inactive lorsqu'elles ne font que légèrement saillie du plancher de cuve 115, par exemple lorsque les lames ne dépassent du plancher de cuve 115 que de moins d'un dixième de la hauteur des lames.

On définit comme une « configuration dense » la configuration dans laquelle les lames du premier sous-jeu de lames 135 et du second sous-jeu de lames 140 sont en position active.

On définit comme une « configuration alternée » la configuration dans laquelle toutes les lames du premier sous-jeu de lames 135 sont en position active tandis que toutes les lames du second sous-jeu de lames 140 sont en position inactive.

On définit comme une « configuration segmentée » la configuration dans laquelle les toutes les lames du second jeu de lame 130 sont dans une position active.

On définit comme une « configuration continue » la configuration dans laquelle toutes les lames du deuxième jeu de lame 130 sont dans une position inactive.

D'une part les configurations dense/alternée et d'autre part les configurations segmentée/continue peuvent être prises indépendamment l'une de l'autre de telle sorte que quatre configurations combinées sont possibles.

Ainsi, les figures 3 à 6 illustrent les différentes configurations de découpe possible, les traits pleins représentant les lames 141 en position active ou les cloisons 65 et les traits mixtes représentant les lames en position inactive ;
- la figure 3 représente la configuration combinée dense et segmentée ;

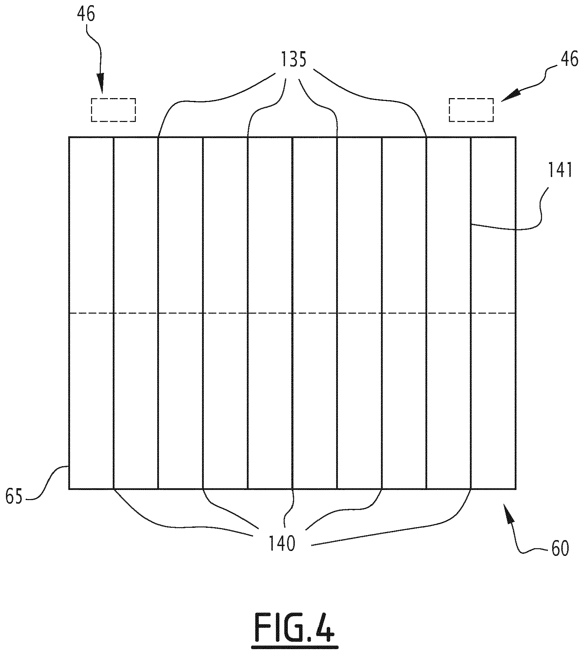

- la figure 4 représente la configuration combinée dense et continue ;

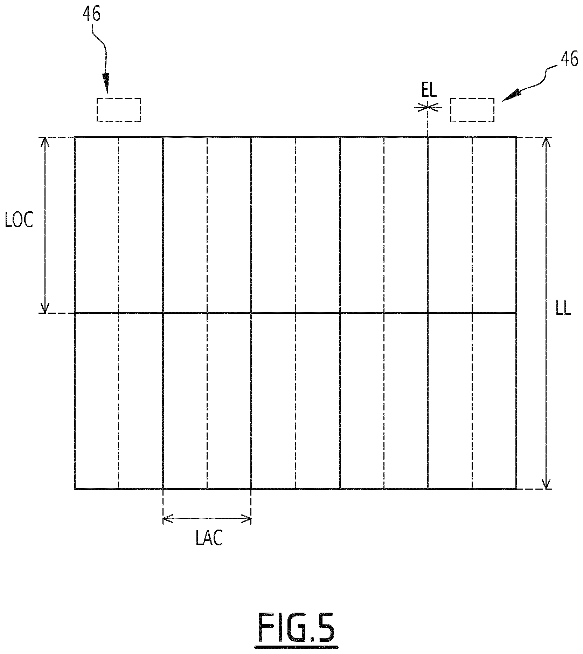

- la figure 5 représente la configuration combinée alternée et segmentée ;

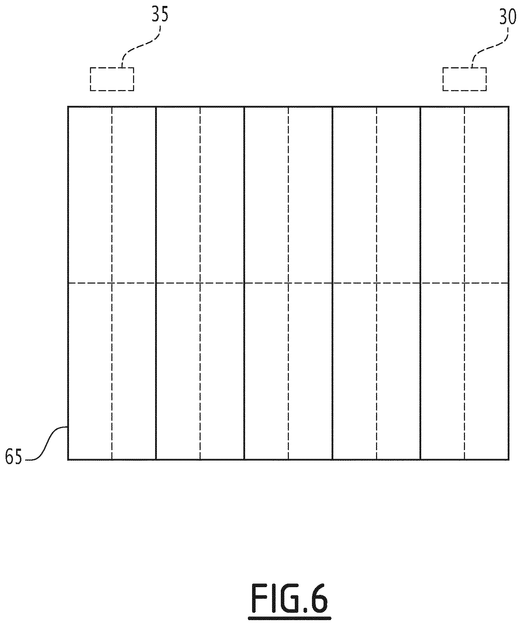

- la figure 6 représente la configuration combinée alternée et continue.

Chaque compartiment de découpe de forme allongée définit selon l'invention une longueur du compartiment de découpe LOC et une largeur du compartiment de découpe LAC.

Selon l'invention le rapport de la longueur LOC sur la largeur LAC de chaque compartiment de découpe est supérieur ou égal à 3. En particulier, le rapport de la longueur LOC sur la largeur LAC de chaque compartiment de découpe est supérieur ou égal à 3,5 et de préférence supérieur ou égal à 4. Le rapport de la longueur LOC sur la largeur LAC de chaque compartiment de découpe peut être inférieur à 20 ou inférieur à 15. La longueur LOC est supérieure à la largeur LAC.

Ainsi, il est possible d'obtenir des pâtons qui peuvent être utilisées sans ou avec peu de façonnage pour la fabrication de baguettes.

Un premier moyen de transition 165 est adapté pour amener le dispositif de division de pâte 1 de la configuration dense vers la configuration alternée. Le premier moyen de transition 165 comprend l'ensemble des moyens de déplacement 122, le module d'interface utilisateur 160 ainsi qu'un moyen d'embrayage 170 du second sous-jeu de lames 140.

Le moyen d'embrayage 170 est apte à maintenir le second sous-jeu de lames 140 en position inactive ou non, en fonction des commandes délivrées par le module d'interface utilisateur 160 et indépendamment du fait que d'autres lames sont amenées en position active.

De manière analogue, un second moyen de transition 175 est adapté pour amener l'ensemble de lames 120 de la configuration segmentée vers la configuration continue. Le moyen de transition 175 comprend l'ensemble des moyens de déplacement 122, le module d'interface utilisateur 160 ainsi qu'un moyen d'embrayage 180 du second jeu de lames.

Le moyen d'embrayage 180 est apte à maintenir le second jeu de lames en position inactive ou non en fonction des commandes délivrées par le module d'interface utilisateur 160 et indépendamment du fait que d'autres lames sont amenées en position active.

Le moyen d'embrayage 181 est apte à maintenir le premier sous-jeu de lames 140 en position inactive ou non, en fonction des commandes délivrées par le module d'interface utilisateur 160 et indépendamment du fait que d'autres lames sont amenées en position active.

Les moyens d'embrayage 170, 180 et 181 peuvent être des moyens mécaniques ou électroniques.

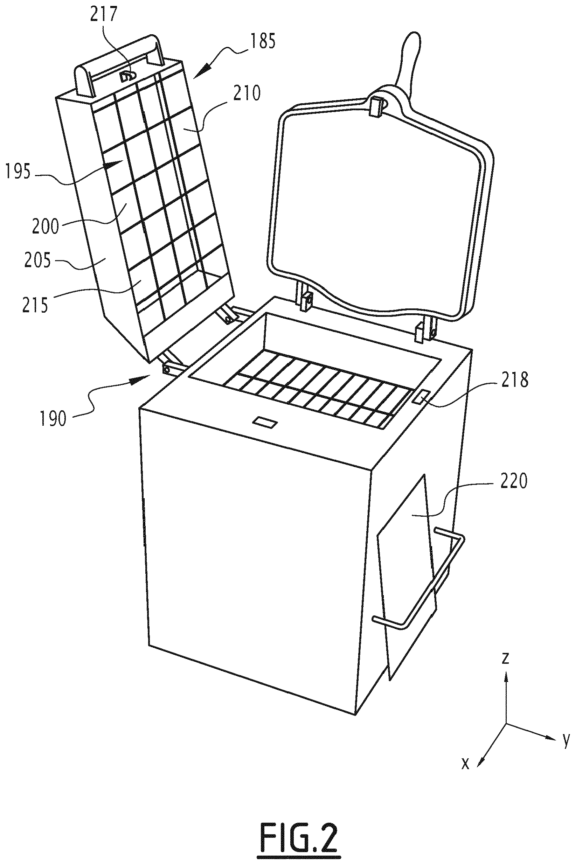

Sur la Figure 2 est représenté un dispositif de division de pâte selon un second mode de réalisation de l'invention. Ce mode de réalisation diffère du premier mode de réalisation uniquement par ce qui suit. Dans ce mode, le dispositif de division de pâte comprend une grille de division 185. La grille de division 185 est mobile par rapport à la cuve 60. Elle est par exemple fixée au voisinage de la face supérieure 15 par un organe d'attache de la grille 190. Cet organe d'attache est par exemple une charnière rendant apte la grille 190 à tourner par rapport à la cuve 60.

La grille de division 185 comprend un organe de division 195. L'organe de division 195 comprend un ensemble d'outils de division 200 agencés en forme de quadrillage. Les outils de division 200 sont par exemple des lames similaires aux lames 141.

La dimension de la direction la plus faible des outils de division 200 est coplanaire au plan défini par l'organe de division 195.

La grille de division 185 comprend par ailleurs une bordure de grille 205, formant un cadre entourant l'organe de division 195. Plus particulièrement, cette bordure de grille 205 maintient les outils de division en leurs extrémités, des faces internes de la bordure de grille 210 étant sensiblement perpendiculaires aux directions de plus grande dimension des outils de division 200.

L'ensemble des outils de division 200 ainsi que la bordure de la grille 210 forment des compartiments de division 215. Ces compartiments de division 215 sont de forme non allongée. Chaque forme non allongée de chaque compartiment de division 215 de grille définissant une longueur LOG et une largeur LAG du compartiment de division, le rapport de la longueur LOG sur la largeur LAG de chaque compartiment de division étant inférieur à 3, notamment inférieur ou égal à 2.

On définit une « position de division » la position dans laquelle la grille de division 185 ferme la cuve 60 du côté opposé au plancher de cuve 115.

On définit une « position de repos » la position dans laquelle la grille de division 185 est dégagée du volume délimité par le prolongement des parois de la cuve.

Un organe de blocage 217 est apte à maintenir la grille de division 185 dans une position de division. L'organe de blocage 217 est par exemple apte à être inséré dans un orifice de blocage 218, l'organe de blocage 217 et l'orifice de blocage 218 formant des moyens de blocage de la grille de division 185 dans sa position de division.

Dans ce mode de réalisation, le dispositif de division 1 comprend par ailleurs un plateau de division 220. Ce plateau de division 220 est apte à être mis en appui sur le plancher de cuve 115 ou sur l'ensemble de lames 120. Avantageusement, le plateau de division 220 est de fine épaisseur, ses autres dimensions étant identiques ou sensiblement égales à celles de l'ouverture 55 de réception de la pâte. En d'autres termes, le plateau de division 220 est apte à couvrir entièrement le plancher de cuve 115 et l'ensemble de lames 120 en étant placé dans la cuve 60.

Un procédé de découpe de pâtons allongés dans le dispositif 1 de division de pâte comprend tout d'abord une étape d'égalisation d'une pâte dans la cuve 60. La pâte est tout d'abord insérée dans la cuve 60, plus particulièrement déposée sur le plancher de cuve 115, le couvercle 25 étant dans la position ouverte. La totalité de l'ensemble de lames 120 est dans la position inactive. La pâte est par exemple grossièrement étalée sur le plancher de cuve 115 à la main. Le couvercle 25 est ensuite mis dans sa position fermée. Le couvercle est maintenu dans sa position fermée par l'interaction entre l'orifice de verrouillage 50 et l'organe de verrouillage 95.

Un cycle de découpe est alors initié par l'intermédiaire du module d'interface utilisateur 160, un utilisateur pouvant choisir la configuration de découpe désirée, par exemple entre une configuration combinée dense et segmentée, une configuration combinée dense et continue, une configuration combinée alternée et segmentée et une configuration combinée alternée et continue.

Le moyen de déplacement principal 156 est alors activé, par exemple en s'allongeant. Le moyen de déplacement principal 156 déplace alors le plancher 115, et les jeux de lames 125 et 130 vers le couvercle 25. Le plancher 115, et les jeux de lames 125 et 130 se déplacent alors simultanément, d'un seul bloc. Les moyens d'embrayage 170, 180 et 181 maintiennent par exemple la totalité de l'ensemble de lames 120 dans une position inactive.

La pâte, par le déplacement du plancher de cuve 115 par rapport aux cloisons 65 vers le couvercle 25 est ainsi aplatie entre le plancher de cuve 115 et le couvercle 25.

Le déplacement du plancher de cuve 115 vers le couvercle est par exemple arrêté à un premier effort seuil sur le moyen de déplacement principal 156.

Une étape de découpe est ensuite initiée. En fonction de la configuration de découpe désirée, chacun des moyens d'embrayage 170, 180, 181 est instruit de maintenir le jeu 125 et les sous-jeux 135, 140 dans une position inactive ou non.

L'effort appliqué par le moyen de déplacement principal est alors augmenté jusqu'à ce que le jeu et les sous-jeux de lames non maintenus dans une position inactive par les moyens d'embrayages 170, 180, 181 soient amenés dans une position active. L'effort appliqué par le moyen de déplacement principal sur les moyens de déplacement 145, 150, 155 est alors par exemple supérieur à une force de rappel des moyens de déplacement 145, 150, 155, force de rappel amenant le jeu 125 et les sous-jeux 135, 140 vers une position inactive. Seuls le jeu 125 et les sous-jeux 135, 140 non maintenus dans une position inactive par les moyens d'embrayage 170, 180, 181 font alors saillie avec le plancher de cuve 115.

Les lames dans une position active sont alors déplacées par le moyen de déplacement principal 156 et les moyens de déplacement 145, 150, 155, vers le couvercle 25. Ces lames viennent alors découper la pâte, pâte aplatie entre le plancher de cuve 115 et le couvercle 25. La découpe est terminée lorsque la face supérieure des lames 141 est à proximité du couvercle. Plus particulièrement, la découpe est terminée lorsque la face supérieure des lames 141 touche la face intérieure du couvercle 80. La découpe est par exemple terminée lorsque l'effort appliqué sur le moyen de déplacement principal 156 est supérieur à une deuxième valeur seuil.

Le couvercle 25 est alors ouvert après déverrouillage par l'organe de verrouillage 95.

Le moyen de déplacement du plancher 143 vient alors monter le plancher de cuve 115 vers la face supérieure 15, les lames en position active étant alors immobiles par rapport à la cuve. Ceci vient alors amener les lames 141 se trouvant en position active vers leur position inactive. Le plancher de cuve 115 est alors à la fin de son déplacement avantageusement aligné avec la face supérieure 15, l'ensemble des lames étant en position inactives. La montée du plancher de cuve 115 et la mise en position inactive de l'ensemble des lames permet une meilleure manutention des pâtons découpés par le dispositif 1.

Le procédé qui vient d'être décrit s'applique aux modes de réalisation des Figures 1 et 2. Le mode de réalisation de la figure 2 peut en outre être utilisé pour le procédé suivant.

Un procédé de découpe de pâtons non allongés est aussi possible par l'utilisation de la grille de division 185 du mode de réalisation du dispositif de division de pâte 1 montré sur la Figure 2.

Le plateau de division 220 est tout d'abord introduit au fond de la cuve 60. Il est déposé sur le plancher de cuve 115 ou sur les lames 220, parallèlement au plancher de cuve 115.

De façon similaire au procédé de découpe de pâtons allongés, la pâte est ensuite insérée dans la cuve 60, à la différence que la pâte est déposée sur le plateau de division 220. Après une éventuelle égalisation à la main de la pâte sur le plancher de la cuve 115, le couvercle 25 est mis dans une position fermée et y est maintenu, par exemple par l'organe de verrouillage 95.

Le moyen de déplacement principal 156 est alors activé pour déplacer le plateau de division 220 vers la face intérieure du couvercle 80.

La pâte est alors aplatie entre le plateau de division 220 vers la face intérieure du couvercle 80.

Le déplacement du plateau de division 220 vers le couvercle est ensuite arrêté, par exemple au premier effort seuil sur le moyen de déplacement principal 156.

Le couvercle 25 est mis dans une position ouverte et la grille de division 185 est installée dans une position de division et verrouillée parallèlement au bâti 15 par l'organe de blocage 217 ajusté dans l'orifice de blocage 218. Le moyen de déplacement principal 156 vient alors déplacer le plateau de division 220 vers la grille de division 185. La pâte précédemment aplatie, monte elle aussi vers la grille de division 185 jusqu'à passer au travers de l'organe de division 195, formant ainsi des pâtons non allongés. La montée de la plaque de division 220 est arrêtée au contact entre la plaque de division 220 et la grille de division 185.

La montée du plateau de division 220 est par exemple terminée lorsque l'effort appliqué sur le moyen de déplacement principal 156 est supérieur à la deuxième valeur seuil.

La grille de division 185 après déverrouillage est alors mise dans une position de repos pour permettre la récupération des pâtons.

Ces deux procédés de découpe sont par exemple mis en oeuvre dans un procédé dé préparation de pain, comprenant en tout premier lieu la préparation d'une pâte par le mélange et la pétrification des ingrédients nécessaire à la fabrication de pain.

Cette pâte est par exemple dans un tel procédé mise au repos avec ou sans phase de fermentation avant de la diviser selon l'un des procédés précédemment décrits, dans un dispositif de division de pâte 1 selon l'invention.

A la suite de la découpe, il est possible de cuire directement les pâtons. Il est par ailleurs possible de laisser fermenter les pâtons en « pousse lente » avant la cuisson qui est alors effectuée en temps voulu.

Le dispositif de division de pâte selon l'invention permet de fabriquer des pâtons de formes variables et adaptés notamment à la fabrication efficace de pâtons de baguettes.

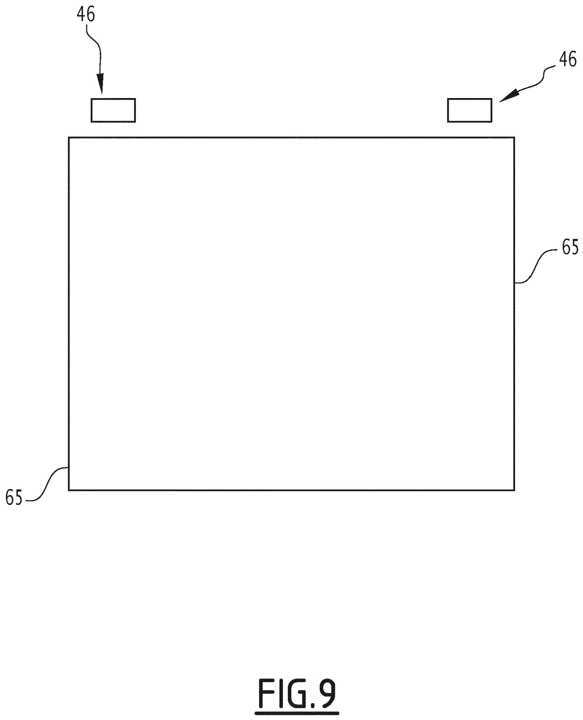

Alternativement, comme représenté sur la Figure 9, la cuve 60 comporte quatre cloisons 65 de longueur identique et le quadrilatère formé par ces cloisons 65 en vue de plan est un carré. Dans ce cas, avantageusement, un côté du carré formé par les cloisons 65 est parallèle à l'arête de la face supérieure la plus proche des protubérances 30, 35.

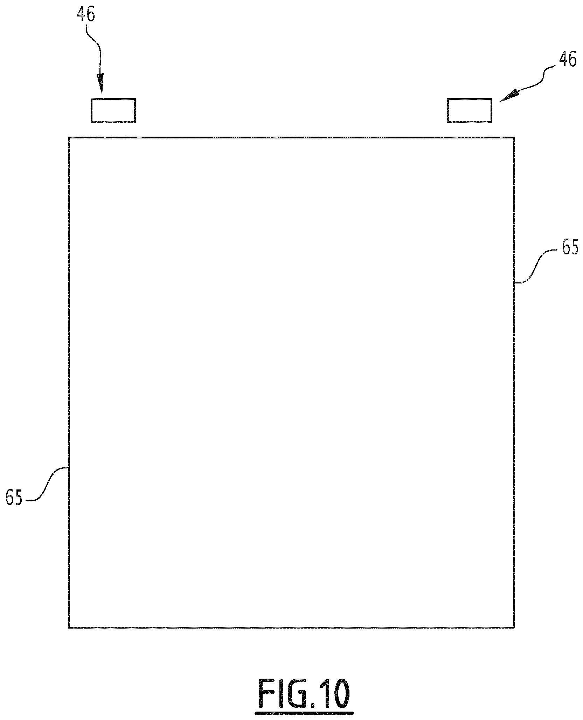

Encore alternativement, comme représenté sur la Figure 10, la cuve 60 comporte quatre cloisons 65 qui forment en vue de plan un rectangle. En l'occurrence, un côté court de ce rectangle est disposé plus proche des charnières 46 que les autres côtés du rectangle. Avantageusement, les côtés courts du rectangle sont parallèles à l'arête de la face supérieure la plus proche des protubérances 30, 35.

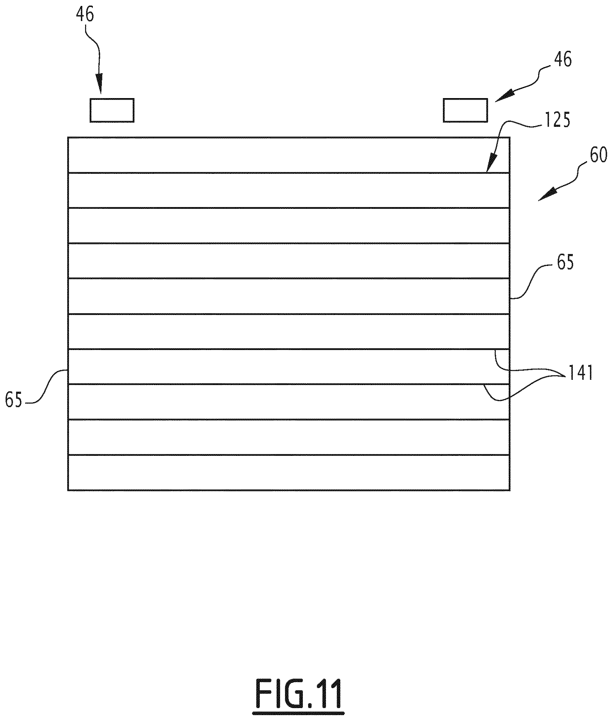

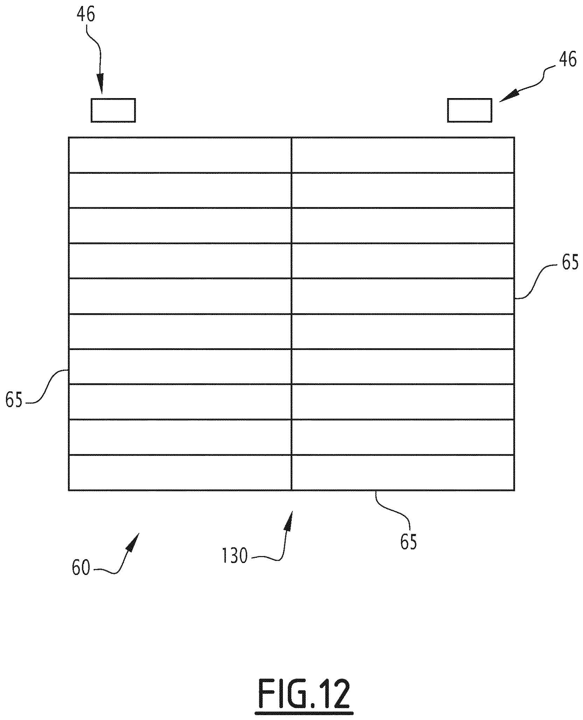

Les figures 11 et 12 sont des représentations schématiques de la cuve 60 du dispositif de division de pâte selon l'invention comportant des variantes de disposition de lames 141.

Comme montré sur la Figure 11 et 12, la longueur LL des lames 141 du premier jeu de lames 125 est orientée selon la direction Y de largeur et/ou parallèlement aux côtés longs du rectangle formé par les cloisons 65.

De plus, et le cas échéant, comme montré sur la Figure 12, la longueur des lames 141 du deuxième jeu de lames 130 est orientée selon la direction X de profondeur et/ou parallèlement aux côtés courts du rectangle formé par les cloisons 65.

Dans ces variantes, la longueur de chaque compartiment de découpe est orientée généralement parallèlement à l'arête de la face supérieure la plus proche des protubérances 30, 35.

Les caractéristiques précitées des Figures 9 à 12 peuvent être combinées entre elles ou avec les autres caractéristiques des modes de réalisation décrites dans la présente description, pour autant qu'elles ne soient pas techniquement incompatibles.

## Revendications

1. Dispositif de division de pâte (1), comprenant :
- une cuve (60) comportant au moins une cloison (65) ;
- un plancher de cuve (115) comprenant des rainures (123) ;
- des lames (141) placées dans les rainures (123) ;
les lames (141) et le plancher de cuve (115) étant mobiles l'un par rapport à l'autre entre une position active dans laquelle les lames (141) font saillie du plancher de cuve et une position inactive ;
un ensemble de lames (120) comportant les lames (141) définissant au moins un compartiment de découpe (161) de forme allongée de la cuve (60), chaque forme allongée de chaque compartiment de découpe (161) définissant une longueur (LOC) et une largeur (LAC) du compartiment de découpe (161) ;
**caractérisé en ce que** le rapport de la longueur (LOC) sur la largeur (LAC) de chaque compartiment de découpe (161) est supérieur ou égal à 3.

2. Dispositif de division de pâte (1) selon la revendication 1, dans lequel la cuve (60) comporte quatre cloisons (65) qui forment en vue de plan un quadrilatère ou un rectangle.

3. Dispositif de division de pâte (1) selon la revendication 1 ou 2, dans lequel le rapport de la longueur (LOC) sur la largeur (LAC) de chaque compartiment de découpe (161) est supérieur ou égal à 3,5.

4. Dispositif de division de pâte selon la revendication 3, dans laquelle le rapport de la longueur (LOC) sur la largeur (LAC) de chaque compartiment de découpe (161) est supérieur ou égal à 4.

5. Dispositif de division de pâte (1) selon l'une quelconque des revendications précédentes, dans lequel l'ensemble de lames (120) comprend un premier jeu de lames (125) parallèles, ce premier jeu (125) comprenant :
- un premier sous-jeu de lames (135) ;
- un second sous-jeu de lames (140) ;
les lames du premier (135) et du deuxième (140) sous-jeu étant disposées en alternance, le dispositif (1) ayant une configuration dense dans laquelle les lames du premier (135) et du deuxième (140) sous-jeu sont en position active et une configuration alternée dans laquelle les lames du premier sous-jeu (135) sont en position active tandis que les lames du deuxième sous-jeu (140) sont en position inactive, un premier moyen de transition (165) étant adapté pour amener le dispositif (1) de la configuration dense vers la configuration alternée.

6. Dispositif de division de pâte (1) selon la revendication 5, dans lequel l'ensemble de lames (120) comprend un second jeu de lames (130), comprenant au moins une lame disposée perpendiculairement aux lames du premier jeu (125), le dispositif (1) ayant une configuration segmentée dans laquelle les lames du second jeu (130) sont dans une position active et une configuration continue dans laquelle les lames du second jeu (130) sont dans une position inactive, un second moyen de transition (175) étant adapté pour amener le dispositif de la configuration segmentée vers la configuration continue.

7. Dispositif de division de pâte (1) selon l'une quelconque des revendications précédentes, dans lequel le dispositif comprend une grille de division (185), qui est montée mobile par rapport à la cuve (60) entre une position de division, dans laquelle la grille (185) ferme la cuve (60) du côté opposé au plancher de cuve (115), et une position de repos, la grille de division (185) définissant au moins un compartiment de division (161) de forme non allongée, chaque forme non allongée de chaque compartiment de division (215) définissant une longueur (LOG) et une largeur (LAG) du compartiment de division (215), le rapport de la longueur (LOG) sur la largeur (LAG) de chaque compartiment de division (215) étant inférieur à 3, notamment inférieur ou égal à 2.

8. Dispositif de division de pâte (1) selon l'une quelconque des revendications précédentes, comprenant par ailleurs une plaque de division (220) adaptée aux dimensions du fond de cuve (60) et adaptée à être en appui sur les lames de découpe (141).

9. Procédé de découpe de pâtons dans un dispositif de division de pâte (1) selon l'une quelconque des revendications précédentes, le dispositif comprenant par ailleurs un couvercle (25) fermant la cuve (60) du côté opposé au plancher de cuve (115), comprenant les étapes suivantes :
- l'égalisation d'une pâte dans la cuve (60), le plancher de cuve (115) montant vers le couvercle (25) et la pâte étant aplatie entre le plancher de cuve (115) et le couvercle (25), l'ensemble des lames (120) étant dans leur position inactives ;
- la découpe de la pâte en pâtons par l'activation d'au moins une lame (141), en mettant lesdites lames (141) dans une position active ;
- l'ouverture du couvercle (25) ; et
- le déplacement du plancher de la cuve (115) par rapport aux lames (141) afin d'amener chaque lame (141) dans sa position inactive.

10. Procédé de découpe de pâtons dans un dispositif de division de pâte (1) selon au moins les revendications 7 et 8 combinées, le dispositif (1) comprenant par ailleurs un couvercle (25) fermant la cuve (60) du côté opposé au plancher de cuve (115), comprenant les étapes suivantes :
- l'égalisation de la pâte dans la cuve (60), la plaque de division (220) étant posée sur les lames (141) montant vers le couvercle (25) fermant la cuve (60) du côté opposé au plancher de cuve (115) et la pâte étant aplatie entre la plaque de division (220) et le couvercle (25) ;
- l'ouverture du couvercle (25) ;
- la mise en place de la grille de division (185) dans la position de division ;
- la division de la pâte en pâtons par la montée de la plaque de division (220) vers la grille de division (185) ; et
- la mise en place de la grille de division (185) dans la position de repos.

11. Procédé de préparation de pain, comprenant :
- la pétrification d'une pâte en obtenant une pâte pétrie ;
- la mise au repos de la pâte pétrie en obtenant une pâte reposée ;
- l'insertion d'un morceau de la pâte reposée dans la cuve (60) d'un dispositif de division de pâte (1) selon l'une des revendications 1 à 8 ;
- la découpe suivant l'une des revendications 9 ou 10 de la pâte reposée insérée dans la cuve (60) en obtenant des pâtons découpés ; et
- la cuisson des pâtons découpés, soit directement, tels que coupés selon l'étape de découpe des pâtons, soit après une étape de fermentation des pâtons.
